# FASCICULE DE BREVET EUROPEEN

(11) **EP 3 732 343 B1**
(45) Date de publication et mention de la délivrance du brevet: **21.09.2022**
(21) Numéro de dépôt: 18943366.7
(22) Date de dépôt: 16.11.2018
(51) Int. Cl.: E06C 7/00

(54) **DISPOSITIF DE SÉCURITÉ PERMETTANT DE DÉTERMINER LE POSITIONNEMENT D'UNE ÉCHELLE**
SICHERHEITSVORRICHTUNG ZUR BESTIMMUNG DER POSITIONIERUNG EINER LEITER
SAFETY DEVICE FOR DETERMINING THE POSITIONING OF A LADDER

(30) Priorité: 26.11.2017 FR 1771264; 06.02.2018 FR 1870126
(43) Date de publication de la demande: 04.11.2020
(73) Titulaire: Gabourg, Maurice, 97113 Gourbeyre (FR)
(72) Inventeur: Gabourg, Maurice, 97113 Gourbeyre (FR)
(74) Mandataire: Célanie, Christian
(86) Numéro de dépôt international: PCT/FR2018/000250
(87) Numéro de publication internationale: WO 2020/152399

(56) Documents cités:
- WO-A1-2011/051885
- DE-U1- 20 201 647
- FR-A1- 2 970 731
- GB-A- 2 296 933

## Description

Le secteur technique de la présente invention est celui des dispositifs de sécurité pour le positionnement d'une échelle ou d'objets similaire.

Le bon positionnement d'une échelle participe à la sécurité de l'utilisateur et permet d'éviter des chutes qui peuvent entraîner une incapacité de l'utilisateur.

On sait que la bonne inclinaison d'une échelle se situe suivant un angle de l'ordre de 70 à 75° et jusqu'à ce jour on a jamais proposé un moyen permettant de déterminer le bon positionnement d'une échelle.

Les études actuelles ont toujours porté sur la stabilité de l'échelle en prévoyant des jambes de force solidaires de l'échelle et prenant appui sur le sol ou sur un mur. Ainsi, le brevet GB-2538852 décrit un dispositif de stabilisation pour une échelle comprenant deux jambes de force reliées de part et d'autre à un barreau de l'échelle afin de définir avec celle-ci un triangle de stabilisation en position de blocage.

Le document WO 2011/051885 A1 divulgue un dispositif de sécurité selon le préambule de la revendication indépendante 1. Le besoin donc existe pour assurer de manière fiable la bonne inclinaison d'une échelle par un particulier ou un professionnel et le but de l'invention est de mettre à la disposition de l'utilisateur un moyen de déterminer rapidement cette inclinaison.

L'invention a donc pour objet un dispositif de sécurité permettant de déterminer le positionnement d'une échelle selon un angle de l'ordre de 70°, caractérisé en ce qu'il comprend un boîtier dans lequel est intégré un circuit électrique comprenant un contacteur d'inclinaison orienté selon une ligne virtuelle, une source d'énergie pour l'alimentation du contacteur, un interrupteur et un bouton poussoir à LED de signalisation lumineuse, un moyen de signalisation sonore actionné par un signal émis par le contacteur d'inclinaison.

Selon une caractéristique de l'invention, le boîtier est inséré dans un barreau de l'échelle.

Selon une autre caractéristique de l'invention, la ligne virtuelle est représentée par une ligne horizontale ou une ligne verticale.

Avantageusement, la ligne horizontale est constituée par le sol.

Selon encore une autre caractéristique de l'invention, le boîtier est équipé d'au moins un poussoir effaçable afin de venir en appui dans un barreau de l'échelle lors de son insertion afin de fixer sa position.

Selon encore une autre caractéristique de l'invention, le boîtier est muni de quatre poussoirs disposés deux à deux sur deux génératrices du boîtier perpendiculaires entre elles.

Selon encore une autre caractéristique de l'invention, le boîtier comporte à une extrémité le moyen de signalisation d'émission sonore du mauvais positionnement de l'échelle.

Selon encore une autre caractéristique de l'invention, le bouton poussoir à LED constitue le moyen de signalisation lumineux.

Selon encore une autre caractéristique de l'invention, le boîtier présente en section une forme circulaire ou carrée.

Un premier avantage de la présente invention réside dans la simplicité d'utilisation du dispositif qui ne nécessite aucune prise en main particulière.

Un autre avantage de la présente invention réside dans l'absence d'intervention mécanique ou physique sur l'échelle elle-même car l'appareil n'implique aucune fixation particulière.

Un autre avantage encore de la présente invention réside dans le fait que l'appareil peut être utilisé sans difficulté par un particulier ou un professionnel au niveau de n'importe quel barreau de l'échelle.

Un autre avantage encore de la présente invention réside dans le très faible encombrement de l'appareil, facilement déplaçable d'une échelle à une autre.

Un autre avantage encore de l'invention réside dans le fait qu'il n'y a aucune fixation permanente de l'appareil, par des vis par exemple, sur l'échelle afin de ne pas affecter son intégrité.

D'autres caractéristiques, avantages et détails de l'invention seront mieux compris à la lecture du complément de description qui va suivre de modes de réalisation donnés à titre d'exemple en relation avec des dessins sur lesquels :
- la figure 1 est une vue d'une échelle positionnée par rapport à une ligne virtuelle horizontale
- la figure 2 illustre la structure du schéma électrique intégré dans l'appareil,
- la figure 3 est une vue de l'appareil équipé de certains composants, et
- la figure 4 illustre la réalisation d'un poussoir destiné à maintenir l'appareil dans un barreau

L'invention va maintenant être décrite avec d'avantages de détails.

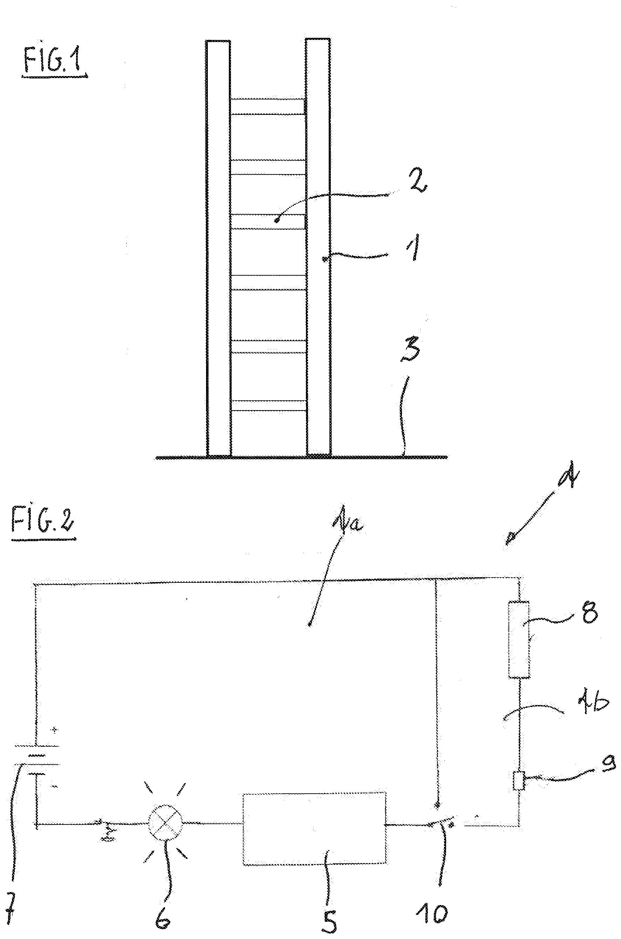

Sur la figure 1, on a représenté schématiquement une échelle 1 équipée de barreaux 2 et positionnée par rapport à une ligne virtuelle 3. Les barreaux 3 ici sont creux et bien entendu en bon état pour recevoir l'appareil selon l'invention. La ligne virtuelle 3 est dans ce cas définie par une ligne horizontale représentant un sol plan.

Sur la figure 2, on a représenté le circuit électrique 4 destiné à être intégré dans le corps de l'appareil comme cela sera expliqué ci-après. Ce circuit 4 comprend un premier circuit 4a dans lequel on intègre un contacteur d'inclinaison 5, un bouton poussoir 6 constituant un moyen de signalisation lumineux, une source d'énergie 7, et un deuxième circuit 4b comprenant un potentiomètre 8, un moyen de signalisation sonore 9 et un interrupteur 10.

Le bouton poussoir 6 permet la mise en service de l'appareil et l'allumage de la diode LED permet de visualiser la mise sous tension.

Le contacteur 5 est un produit du commerce qui ne nécessite pas une description complète. Globalement, ce contacteur 5 intègre dans une réalisation un liquide conducteur qui va se déplacer selon son inclinaison en créant un contact. Préalablement à son intégration dans le circuit électrique 4, ce contacteur est étalonné suivant la ligne virtuelle 3 pour engendrer, lorsqu'il est alimenté, un courant tant que l'angle d'étalonnage prédéterminé n'est pas atteint. Par exemple, on peut prévoir un angle d'étalonnage de 70 à 75° qui représente la bonne inclinaison d'une échelle.

Ainsi, tant que l'angle d'inclinaison n'est pas atteint en inclinant l'échelle 1, le contacteur 5 délivre un courant et s'interrompt lorsque cet angle d'inclinaison est atteint. L'échelle est alors dans la bonne position et l'appareil est mis hors tension automatiquement. Il va de soi que le dispositif renfermant le contacteur d'inclinaison 5 est introduit dans un barreau de l'échelle en positionnant celle-ci dans une position sensiblement verticale de l'échelle 1.

On voit que dans cette configuration le moyen de signalisation sonore 9, une alarme par exemple, et le moyen de signalisation lumineux 6, une diode led par exemple, sont activés tant que l'échelle 1 n'est pas dans la bonne position.

On a prévu l'interrupteur 10 apte à occuper deux positions : une première position dans laquelle les deux circuits 4a et 4b évoqués précédemment sont alimentés et une seconde position d'alimentation seule du premier circuit 4a. On voit que dans la seconde position, l'alimentation du buzzer 9 est coupée et le deuxième circuit 4b est alors ouvert de manière interrompre ainsi l'émission sonore.

Il va de soi qu'on peut prévoir une configuration inverse dans laquelle les moyens de signalisation sonore et/ou lumineux sont activés lorsque l'échelle 1 est dans la bonne position.

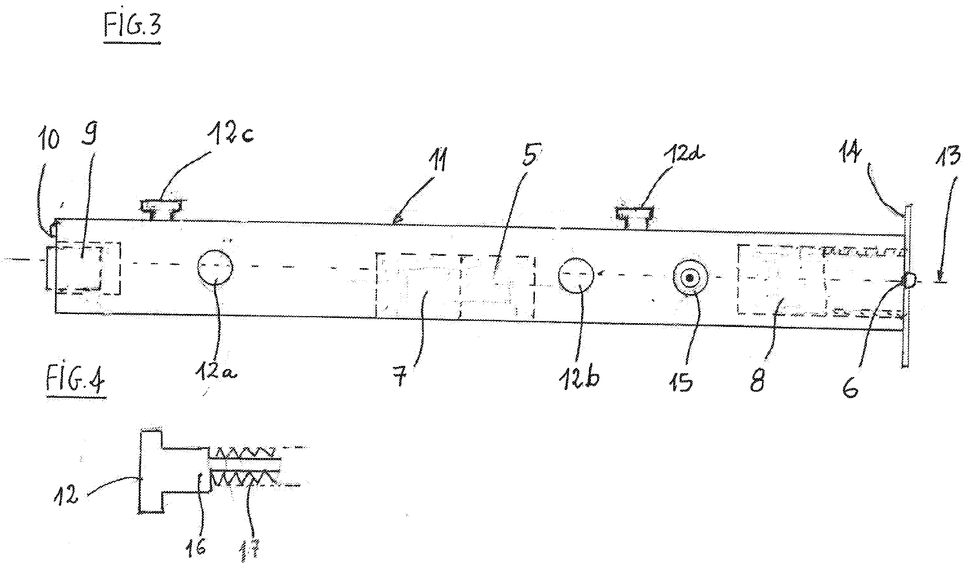

Sur la figure 3, on a représenté une vue schématique de l'appareil selon l'invention se présentant sous la forme d'un boîtier 11 fermé par un couvercle (non représenté) et muni de quatre poussoirs effaçables 12. Ces poussoirs sont disposés deux à deux sur deux génératrices du boîtier 11 perpendiculaires entre elles. Ainsi, les poussoirs 12a et 12b sont disposés sur une même génératrice 13 tandis que les poussoirs 12c et 12d sont disposés également sur une même génératrice (non représentée) perpendiculaire à la génératrice 13. Cette disposition permet d'obtenir un maintien parfait du boîtier 11 dans le barreau 2 de l'échelle 1. Il va de soi que la course des poussoirs 12 est prévue pour compenser les différences de diamètre d'un barreau à un autre lorsqu'on passe d'une échelle à une autre.

On peut réaliser l'appareil sous la forme d'un ensemble plein dans lequel les différents composants sont noyés en laissant ouvert le compartiment renfermant la source d'énergie 7, compartiment qui sera muni d'un couvercle. Bien entendu, les poussoirs 12 restent saillants à l'extérieur de cet ensemble plein, ainsi que la plaque 14, l'interrupteur 10, une partie du buzzer 9.

On a représenté à titre d'exemple le boîtier 11 équipé du circuit électrique 4 dont on a schématisé les composants. On retrouve donc le contacteur 5, la source d'énergie 7 qui peut être par exemple une pile, le bouton poussoir à LED 6 de signalisation lumineuse, le potentiomètre 8, le moyen de signalisation sonore 9, un buzzer par exemple, et l'interrupteur 10 de coupure de ce buzzer. Le boîtier 11 peut être équipé d'une plaque 14 facilitant sa préhension. On voit que les moyens de signalisation 6 et 9 sont disposés au niveau des extrémités du boîtier 11.

Il va de soi que ces composants sont insérés dans le boîtier 11 de manière adéquate sans que cela nécessite des précisions supplémentaires.

Le bouton poussoir 6 permet d'assurer les deux modes de fonctionnement évoqués précédemment à savoir soit une signalisation en continu du mauvais positionnement de l'échelle soit une signalisation lors du bon positionnement de l'échelle.

On a encore représenté sur la figure un niveau à bulle 15 intégré dans le boîtier 11. Celui-ci est calibré de manière à avoir un niveau parfait. Ce niveau 15 constitue une sécurité supplémentaire, c'est-à-dire un point de contrôle par exemple si la source d'énergie est défaillante ou lorsque l'échelle est en position latérale à droite ou à gauche. Un retrait partiel de l'appareil permet d'avoir accès à ce niveau à bulle 15.

Sur la figure 4, on a représenté un exemple de réalisation du poussoir 12 sous la forme d'une tige 16 en prise sur un ressort 17 tous deux engagés de manière serrée dans un logement du boîtier 11. Lors de l'insertion de l'appareil dans un barreau, il suffit de presser chacun des poussoirs 12a-12d pour les effacer et faire entrer le boîtier dans le barreau. Les poussoirs 12 viennent alors en appui dans un barreau de l'échelle afin de fixer sa position suivant deux directions perpendiculaires.

Le dispositif de sécurité selon l'invention peut être réalisé de manière quasi universelle afin de s'adapter à une grande majorité d'échelles, par exemple avec un entre-axe de 22 à 25 mm. Bien entendu, le dispositif est adaptable aux échelles de toute dimension et dont les barreaux peuvent être de forme carrée, triangulaire, ovale, en losange ou autre.

Lorsque sur le terrain l'échelle manifeste un jeu latéral, c'est-à-dire qu'elle penche à droite ou à gauche, ce jeu peut être compensé par une béquille ou tout autre élément équivalent.

Pour utiliser l'appareil selon l'invention, on s'y prend de la manière suivante ou de manière équivalente. On place l'échelle à la verticale et on introduit l'appareil dans un barreau et il est mis en marche en actionnant l'interrupteur LED 6. On déplace le bas de l'échelle jusqu'à l'obtention de la bonne inclinaison tant que les moyens de signalisation (buzzer ou led) restent en fonction. La LED s'éteint et le buzzer s'arrête alors de sonner.

Dans le cas où l'échelle ne comporte pas de barreaux creux, on peut fixer l'appareil sur un des montants par exemple à l'aide de crochets. Il va de soi que l'appareil est doté des mêmes caractéristiques mais en prévoyant un calage du contacteur d'inclinaison sur une ligne virtuelle verticale.

## Revendications

1. Dispositif de sécurité permettant de déterminer le positionnement d'une échelle (1) selon un angle de l'ordre de 70° et destiné à être inséré de manière amovible dans un barreau (2) de l'échelle, le dispositif comprend un boîtier (11) dans lequel est intégré un circuit électrique (4) comprenant un contacteur d'inclinaison (5) orienté selon une ligne virtuelle (3), une source d'énergie (7) pour l'alimentation du contacteur (5), un interrupteur (10) et un bouton poussoir à LED (6) de signalisation lumineuse, un moyen de signalisation sonore (9) actionné par un signal émis par le contacteur d'inclinaison (5), le bouton poussoir à LED (6) et le moyen de signalisation sonore (9) étant activés tant que l'échelle n'est pas dans la bonne position, **caractérise en ce que** le dispositif comprend en outre un niveau à bulle (15) calibré pour un niveau parfait.

2. Dispositif de sécurité permettant de déterminer le positionnement d'une échelle selon la revendication 1, **caractérisé en ce que** le boîtier (11) est équipé d'au moins un poussoir effaçable (12) afin de venir en appui dans un barreau de l'échelle lors de son insertion afin de fixer sa position.

3. Dispositif de sécurité permettant de déterminer le positionnement d'une échelle selon la revendication 2, **caractérisé en ce que** le boîtier (11) est muni de quatre poussoirs (12a-12d) disposés deux à deux sur deux génératrices du boîtier (11) perpendiculaires entre elles.

4. Dispositif de sécurité permettant de déterminer le positionnement d'une échelle selon l'une des revendications 1 à 3, **caractérisé en ce que** la ligne virtuelle (3) est représentée par une ligne horizontale ou une ligne verticale.

5. Dispositif de sécurité permettant de déterminer le positionnement d'une échelle selon la revendication 4, **caractérisé en ce que** la ligne horizontale est constituée par le sol.

6. Dispositif de sécurité permettant de déterminer le positionnement d'une échelle selon l'une quelconque des revendications précédentes, **caractérisé en ce que** le boîtier (11) comporte à une extrémité le moyen de signalisation d'émission sonore (9) du mauvais positionnement de l'échelle.

7. Dispositif de sécurité permettant de déterminer le positionnement d'une échelle selon l'une quelconque des revendications précédentes, **caractérisé en ce que** le bouton poussoir à LED (6) constitue le moyen de signalisation lumineux.

8. Dispositif de sécurité permettant de déterminer le positionnement d'une échelle selon l'une quelconque des revendications précédentes, **caractérisé en ce que** le boîtier (11) présente en section une forme circulaire ou carrée.

9. Echelle comprenant un dispositif selon l'une quelconque des revendications précédentes.

## Patentansprüche

1. Sicherheitsvorrichtung, welche es ermöglicht, die Positionierung einer Leiter (1) gemäß einem Winkel in der Größenordnung von 70° zu bestimmen, und welche dazu bestimmt ist, in herausnehmbarer Weise in eine Sprosse (2) der Leiter eingesetzt zu werden, wobei die Vorrichtung ein Gehäuse (11) aufweist, in welches ein elektrischer Schaltkreis (4) integriert ist, welcher einen gemäß einer virtuellen Linie ausgerichteten Neigungsschalter (5), eine Energiequelle (7) für die Versorgung des Schalters (5), einen Unterbrecher (10) und einen Taster mit LED (6) zur Lichtsignalisierung, sowie ein Mittel zur akustischen Signalisierung (9) aufweist, welches durch ein von dem Neigungsschalter (5) ausgegebenes Signal betätigt wird, wobei der Taster mit LED (6) und das Mittel zur akustischen Signalisierung (9) aktiviert werden, solange sich die Leiter nicht in der richtigen Position befindet, **dadurch gekennzeichnet, dass** die Vorrichtung außerdem eine Wasserwaage (15) aufweist, welche für ein perfektes Niveau kalibriert ist.

2. Sicherheitsvorrichtung, welche es ermöglicht, die Positionierung einer Leiter zu bestimmen, nach Anspruch 1, **dadurch gekennzeichnet, dass** das Gehäuse (11) mit mindestens einem beseitigbaren Stößel (12) ausgerüstet ist, um sich bei dessen Einsetzen in einer Sprosse der Leiter abzustützen, um dessen Position zu fixieren.

3. Sicherheitsvorrichtung, welche es ermöglicht, die Positionierung einer Leiter zu bestimmen, nach Anspruch 2, **dadurch gekennzeichnet, dass** das Gehäuse (11) mit vier Stößeln (12a-12d) versehen ist, welche paarweise auf zwei Erzeugenden des Gehäuses (11) senkrecht zueinander angeordnet sind.

4. Sicherheitsvorrichtung, welche es ermöglicht, die Positionierung einer Leiter zu bestimmen, nach einem der Ansprüche 1 bis 3, **dadurch gekennzeichnet, dass** die virtuelle Linie (3) durch eine horizontale Linie oder eine vertikale Linie dargestellt ist.

5. Sicherheitsvorrichtung, welche es ermöglicht, die Positionierung einer Leiter zu bestimmen, nach Anspruch 4, **dadurch gekennzeichnet, dass** die horizontale Linie von dem Boden gebildet wird.

6. Sicherheitsvorrichtung, welche es ermöglicht, die Positionierung einer Leiter zu bestimmen, nach irgendeinem der vorhergehenden Ansprüche, **dadurch gekennzeichnet, dass** das Gehäuse (11) an einem Ende das Mittel zur Signalisierung mit akustischer Emission (9) der falschen Positionierung der Leiter umfasst.

7. Sicherheitsvorrichtung, welche es ermöglicht, die Positionierung einer Leiter zu bestimmen, nach irgendeinem der vorhergehenden Ansprüche, **dadurch gekennzeichnet, dass** der Taster mit LED (6) das Mittel zur Lichtsignalisierung bildet.

8. Sicherheitsvorrichtung, welche es ermöglicht, die Positionierung einer Leiter zu bestimmen, nach einem der vorhergehenden Ansprüche, **dadurch gekennzeichnet, dass** das Gehäuse (11) im Querschnitt eine kreisförmige oder quadratische aufweist.

9. Leiter, aufweisend eine Vorrichtung nach irgendeinem der vorhergehenden Ansprüche.

## Claims

1. Safety device enabling the positioning of a ladder (1) to be determined at an angle in the order of 70° and intended to be inserted detachably into the rung (2) of a ladder, the device comprising a case (11) into which an electric circuit (4) is integrated comprising a tilt switch (5) oriented along a virtual line (3), a power source (7) to operate the tilt switch (5), a power switch (10) and a LED push button (6) giving a light signal, a sound signal device (9) activated by a signal emitted by the tilt switch (5), the LED push button (6) and the sound signal device (9) being activated for as long as the ladder is in an improper position, wherein the device additionally comprises a spirit level (15) calibrated for a perfect level.

2. Safety device enabling the positioning of a ladder to be determined according to Claim 1, wherein the case (11) is fitted with at least one retractable push-button (12) so as to press on a rung of the ladder during its insertion so as to fix its position.

3. Safety device enabling the positioning of a ladder to be determined according to Claim 2, wherein the case (11) is fitted with four push-pieces (12a-12d) arranged two by two on two generatrices of the case (11) perpendicular to each other.

4. Safety device enabling the positioning of a ladder to be determined according to one of Claims 1 to 3, wherein the virtual line (3) is represented by a horizontal line or a vertical line.

5. Safety device enabling the positioning of a ladder to be determined according to Claim 4, wherein the horizontal line is constituted by the ground.

6. Safety device enabling the positioning of a ladder to be determined according to any one of the above Claims, wherein the case (11) incorporates the sound emitting signal means (9) at one end to indicate the improper positioning of the ladder.

7. Safety device enabling the positioning of a ladder to be determined according to any one of the above Claims, wherein the LED push button (6) constitutes the light signal means.

8. Safety device enabling the positioning of a ladder to be determined according to any one of the above Claims, wherein the case (11) has a circular or square-shaped section.

9. Ladder comprising a device according to any one of the above Claims.
